# EUROPÄISCHE PATENTANMELDUNG

(11) **EP 1 788 406 A1**
(43) Veröffentlichungstag der Anmeldung: **23.05.2007**
(21) Anmeldenummer: 06019310.9
(22) Anmeldetag: 15.09.2006
(51) Int. Cl.: G01S 5/14, H04B 7/08, H01Q 1/32, H01Q 21/28, H01Q 21/29

(54) **GPS-unterstützte Richtdiagrammnutzung beim Empfang von hochfrequenten Signalen in einem Fahrzeug**

(30) Priorität: 29.10.2005 DE 102005051917
(71) Anmelder: Hirschmann Car Communication GmbH, 72654 Neckartenzlingen (DE)
(72) Erfinder: Daum-Siegesmund, Marco, 70597 Stuttgart (DE)
(74) Vertreter: Thul, Hermann

(57) **Zusammenfassung**

Verfahren zum Empfangen hochfrequenter Signale in einem Fahrzeug, das mehrere auswählbare Antennen sowie Mittel zur Erfassung der augenblicklichen Position des Fahrzeuges aufweist, wobei erfindungsgemäß vorgesehen ist, dass in Abhängigkeit der festgestellten augenblicklichen Position des Fahrzeuges diejenige Antenne ausgewählt wird, mit der eine vorbestimmte Frequenz bestmöglich empfangen wird.

## Beschreibung

Die Erfindung betrifft ein Verfahren und eine Vorrichtung zum Empfangen hochfrequenter Signale in einem Fahrzeug gemäß den Merkmalen des Oberbegriffes des Patentanspruchs 1.

Bei modernen Fahrzeugen sind sogenannte Diversity-Systeme integriert, die mehrere Antennen umfassen, wobei während der Bewegung des Fahrzeuges von dem Diversity-System diejenige Antenne auswählt, die für eine vorbestimmte Frequenz, das heißt einen ausgewählten Sender, den bestmöglichen Empfang bildet. Dabei gibt es aufwändige Systeme, um anhand der empfangenen hochfrequenten Signale festzustellen, welche Antennen den bestmöglichen Empfang liefert. An dieser Stelle sei nur festgehalten, dass zum Beispiel die einzelnen Signalpegel der Antennen miteinander verglichen werden und anhand dessen der bestmögliche Empfang festgestellt wird. Das bedeutet, dass Empfangssysteme bei Fahrzeugen mit mehreren Antennen auf dem Ungleichheits-Prinzip der Antennen beruhen und auf die aktuelle Empfangssituation reagiert wird und das Diversity-System zum Beispiel durch Umschalten auf eine andere Antenne oder Phasenaddition der Signale mehrerer Antennen versucht, eine Alternativantenne mit besseren Empfangseigenschaften zu finden. Dabei wurde die Richtcharakteristik der einzelnen im Fahrzeug angeordneten Antennen nicht berücksichtigt, da dies bei den bekannten Diversity-Systemen konstruktionsbedingt nicht möglich war.

Der Erfindung liegt daher die Aufgabe zugrunde, ein Verfahren und eine Vorrichtung zur Durchführung des Verfahrens zum Empfangen hochfrequenter Signale in einem Fahrzeug bereitzustellen, bei dem mit möglichst wenig Aufwand der Empfang der hochfrequenten Signale verbessert und damit die Empfangseigenschaften und auch die Wiedergabequalität der empfangenen hochfrequenten Signale verbessert wird.

Diese Aufgabe ist durch die Merkmale des Patentanspruchs 1 gelöst.

Erfindungsgemäß ist vorgesehen, dass in Abhängigkeit der festgestellten augenblicklichen Position des Fahrzeuges diejenige Antenne von mehreren Antennen ausgewählt wird, mit der eine vorbestimmte Frequenz bestmöglich empfangen wird. Bei der Erfindung wird also erstmalig die Position des Fahrzeuges bei dem Umschaltvorgang in Diversity-Systemen berücksichtigt. Dadurch kann die Richtcharakteristik der einzelnen Antennen berücksichtigt werden, was zu einer Steigerung der Empfangsqualität der einzelnen Antennen führt. Das wiederum bedeutet, dass im Regelfall diejenige Antenne ausgewählt wird, deren Richtdiagramm vollständig oder zumindest teilweise in Richtung des Standortes des Senders, der die hochfrequenten Signale abstrahlt, ausgerichtet ist. Dazu ist es erforderlich, die augenblickliche Position des Fahrzeuges, vorzugsweise auch weitere Parameter wie Fahrtrichtung und Geschwindigkeit, zu kennen und bei der Auswahl der zuständigen Empfangsantenne zu berücksichtigen. Im Idealfall wird also diejenige Antenne von mehreren Antennen des Fahrzeuges ausgewählt, deren Richtcharakteristik es bestmöglich ermöglicht, das ausgewählte Rundfunk- oder Fernsehprogramm des abstrahlenden Senders in der Nähe zu erfassen. Dabei ist es nicht zwangsweise erforderlich, dass immer derjenige abstrahlende Sender mit der kürzesten Distanz zu dem Fahrzeug ausgewählt wird, da zum Beispiel ein solcher Sender die vorbestimmte Frequenz (also das gewünschte Rundfunk- oder Fernsehprogramm) nicht abstrahlt. Mit der Erfindung wird also eine Verbindung zwischen dem abstrahlenden Sender, der das Radio- oder Fernsehprogramm abstrahlt, das empfangen werden soll, und derjenigen Antenne im Fahrzeug mit der Richtcharakteristik, die dieses Programm am besten empfangen kann, hergestellt.

Diese Erfindung läßt sich im Übrigen leicht verwirklichen, da moderne Fahrzeuge mit einem Navigationssystem ausgerüstet sind, die die Fahrzeugparameter, wie Position, Fahrtrichtung und Geschwindigkeit bereitstellen. Daraus können, gegebenenfalls unter Berücksichtigung weiterer Fahrzeugparameter (zum Beispiel Sensoren für die Drehzahl oder Drehzahländerung an den Rädern, die ein ABS-System zur Verfügung stellen) berücksichtigt werden, um auch Fahrzeugparameter, wie Fahrtrichtungsänderungen und Geschwindigkeitsänderungen zu berücksichtigen. Diese Daten des Fahrzeuges stehen jederzeit während des Betriebes oder auch im Stillstand des Fahrzeuges zur Verfügung und können bei dem Verfahren oder innerhalb der Vorrichtung mit verarbeitet werden. Ergänzend oder alternativ dazu ist es erfindungsgemäß vorgesehen, dass geographische Standorte von Sendern, die die hochfrequenten Signale (Radio- und/oder Fernsehprogramme, die auf bestimmten Frequenzen (Kanälen) abgestrahlt werden) in einem Speicher im Fahrzeug abgelegt sind. Dabei können diese Informationen einmalig, zum Beispiel mit Auslieferung des Fahrzeuges oder nach jedem Werkstattaufenthalt, eingegeben bzw. aktualisiert werden. Daneben ist es ebenfalls denkbar, dass der Speicherinhalt mit den geographischen Standorten aktualisiert wird. Dies kann einerseits dadurch erfolgen, dass ein Benutzer des Fahrzeuges den Speicherinhalt aktualisiert, in dem er zum Beispiel neue, ergänzende oder aktualisierte Daten von einem Speichermedium (zum Beispiel CD-ROM oder DVD) in den Speicher der Vorrichtung überträgt. Andererseits ist es denkbar, dass diese Ergänzung neuer Positionen oder die Aktualisierung bestehender Positionen der geographischen Standorte der Sender online, das heißt über die Übertragung von hochfrequenten Signalen in das Fahrzeug, erfolgt.

Neben der Berücksichtigung von Fahrzeugparametern und der geographischen Standorte der Sender kann auch das Richtdiagramm der Antennen bei der Auswahl der Antenne mit bestmöglichem Empfang berücksichtigt werden. Auch diese Richtdiagramme, verbessert den Signalempfang, da neben den anderen Kriterien auch als Kriterium das Richtdiagramm derjenigen Antenne berücksichtigt wird, die bei der aktuellen Position des Fahrzeuges den bestmöglichen Empfang bietet.

Insgesamt bietet die Erfindung also den Vorteil, dass in Verbindung mit der Richtcharakteristik der einzelnen Antennen und einer Liste der empfangbaren Sender, die Programme abstrahlen, die Antenne mit dem bestmöglichen (optimalen) Empfang des gewünschten Senders ausgewählt werden kann. Damit entfällt in vorteilhafter Weise der Empfang von zwei oder noch mehr Sendern, die aus unterschiedlichen Richtungen durch je unterschiedliche Antennen empfangen werden und ein und dasselbe Programm ausstrahlen. Damit ermöglicht es die Erfindung, dass das Empfangssystem im Fahrzeug nicht mehr zwischen den zwei oder mehr Sendern wechseln muß, was zu einer deutlichen Verbesserung der Empfangsqualität, die hörbar und sichtbar ist, führt. Außerdem bietet die Erfindung eine schnellere Auswahl des gewünschten Radio- oder Fernsehprogramms, das empfangen und unter Umständen in der Nähe des Fahrzeuges von mehreren Sendern abgestrahlt wird. Da das Empfangssystem die Position des Fahrzeuges kennt und daneben auch die geographischen Standorte der Sender, kann es schneller denjenigen Sender auswählen, der das gewünschte Radio- oder Fernsehprogramm abstrahlt, da es gezielt aufgrund der Standortkenntnisse von Sender und Fahrzeug auf diejenige Antenne umschalten kann, die den optimalen Signalempfang bietet.

Weiterhin ist erfindungsgemäß eine Vorrichtung zur Durchführung des Verfahrens gemäß einem der vorhergehenden Ansprüche vorgesehen.

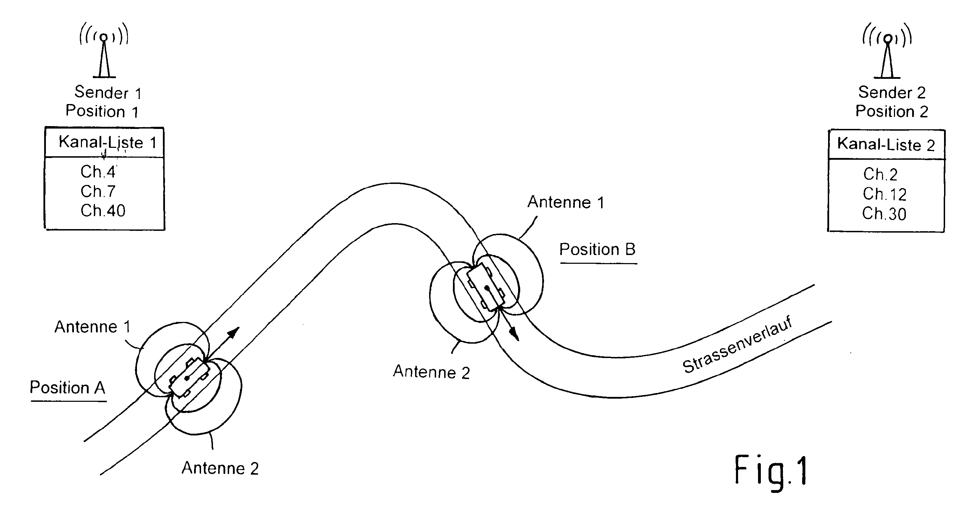

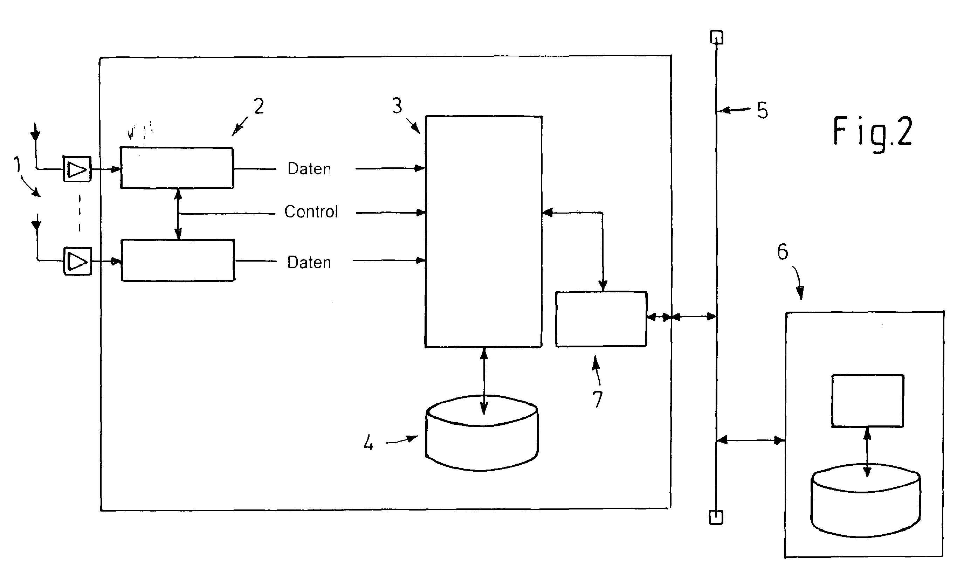

Zum besseren Verständnis wird die Erfindung anhand der Figuren 1 und 2 im Folgenden erläutert und beschrieben.

Es wird davon ausgegangen, dass sich ein Fahrzeug, wie in der Figur 1 gezeigt, auf einer Straße (Straßenverlauf) bewegt und dabei exemplarisch die beiden Positionen A und B durchfährt. Diese beiden Positionen A und B sind nur Momentaufnahmen zur Erläuterung der Erfindung, während das Verfahren selbstverständlich jederzeit während der Bewegung des Fahrzeuges oder auch während dessen Stillstand durchgeführt werden kann.

Es wird davon ausgegangen, dass das Fahrzeug zwei Antennen 1 und 2 aufweist, wobei es auch mehr als zwei Antennen aufweisen kann. Die Einbauorte und Gestaltung der Antennen im Fahrzeug kann beliebig sein, da das erfindungsgemäße Verfahren die Richtdiagramme der Antennen berücksichtigt.

In dem Ausführungsbeispiel wird davon ausgegangen, dass die Richtdiagramme jeweils in Fahrtrichtung betrachtet rechts und links von dem Fahrzeug in etwa elipsenförmig sind (dies stellt keine Einschränkung der Erfindung dar). Weiterhin sind an Positionen 1, 2 Stationärsender 1, 2 angeordnet, die bestimmte Rundfunk- und/oder Fernsehprogramme abstrahlen. Diese geographischen Standorte von Sendern werden als bekannt vorausgesetzt. Bei diesem Ausführungsbeispiel strahlt der Sender 1 zum Beispiel eine Kanalliste 1 mit den Kanälen 4, 7 und 40 aus. Der Sender 2 auf Position 2 strahlt in seiner Kanalliste 2 die Kanäle 2, 12 und 30 aus. Bei den Kanälen handelt es sich um vorbestimmte Frequenzen. Befindet sich das Fahrzeug nun in Position A, bietet die Antenne 1 mit ihrer Richtcharakteristik den bestmöglichen Empfang für die Kanäle 4, 7 und 40, wenn diese empfangen werden sollen. Soll einer der Kanäle 2, 12, 30 empfangen werden, was durch den Benutzer des Fahrzeuges vorgegeben wird, bietet die Antenne 2 den bestmöglichen Empfang für diese Kanäle, so dass das System die Antenne 2 in Position A auswählen wird. Genauso verhält es sich in Position B des Fahrzeuges, bei dem das Empfangssystem die Antenne 1 auswählen wird, wenn die Kanäle 2, 12, 30 empfangen werden sollen. Sollen andererseits die Kanäle 4, 7 oder 40 empfangen werden, bietet die Antenne 2 aufgrund ihrer Position im Fahrzeug und aufgrund ihres Richtdiagramms den besseren Empfang, so dass das Empfangssystem in dem Fall auf diese Antenne 2 umschalten wird.

In Figur 2 ist eine Vorrichtung zur Durchführung des Verfahrens an Hand eines Blockschaltbildes beispielhaft dargestellt.

Ein HF-Pfad 1 weist als Signal-Quelle mehrere Antennen, insbesondere zwei Antennen mit unterschiedlichen Richtdiagrammen auf. Diesem HF-Pfad 1 ist eine Empfangseinheit 2 (insbesondere Mischer, Filter, Demodulatoren und dergleichen aufweisend) nachgeschaltet, die Daten an eine Steuereinheit 3, insbesondere an den Microcontroller (µC) (z.B. im Falle des Empfangs von digitalen TV-Signalen), liefert. Die Steuereinheit 3 verwendet die Daten von der Empfangseinheit 2 und einem Navigationssystem 6, welches die augenblickliche Position des Fahrzeuges feststellt, zur Aktualisierung einer Speichereinheit 4, insbesondere einer Datenbasis, und Steuerung der Empfangseinheit 2. Die Speichereinheit 4 ist zur Ablage von empfangenen Daten und Verwendung der gespeicherten Daten sowie zur Ansteuerung der Empfangseinheit 2 ausgebildet. Dabei sind die Empfangseinheit 2, die Steuereinheit 3 sowie die Speichereinheit 4 über ein Bus-Interface 7 mit einem Bus 5, insbesondere dem Medien-Bus, des Fahrzeugs untereinander zwecks Datenaustausches verbunden). Das Navigationssystem 6 liefert Daten bezüglich Position, Geschwindigkeit und Fahrtrichtung und ggfs. weitere Daten des Fahrzeuges.

Es versteht sich von selbst, dass die Anzahl der Sender in der Realität wesentlich höher ist und auch die Kanallisten der einzelnen Sender von den exemplarisch dargestellten drei Kanälen deutlich abweichen kann.

Abschließend sei noch ein weiterer Vorteil der Erfindung genannt. Für den Fall, dass zum Beispiel ein Sender Kanäle mit Programmen in verschiedenen Sprachen oder Programmtypen abstrahlt, kann aufgrund der Vorgabe des Benutzers des Fahrzeuges oder automatisch aufgrund des Standortes des Fahrzeuges ein landesspezifischer oder programmtypischer Kanal ausgewählt werden.

## Patentansprüche

1. Verfahren zum Empfangen hochfrequenter Signale in einem Fahrzeug, das mehrere auswählbare Antennen sowie Mittel zur Erfassung der augenblicklichen Position des Fahrzeuges aufweist, **dadurch gekennzeichnet, dass** in Abhängigkeit der festgestellten augenblicklichen Position des Fahrzeuges diejenige Antenne ausgewählt wird, mit der eine vorbestimmte Frequenz bestmöglich empfangen wird.

2. Verfahren nach Anspruch 1, **dadurch gekennzeichnet, dass** geographische Standorte von Sendern, die die hochfrequenten Signale abstrahlen, in einem Speicher in dem Fahrzeug abgelegt und abrufbar sind.

3. Verfahren nach Anspruch 2, **dadurch gekennzeichnet, dass** der Speicherinhalt fest eingespeichert oder aktualisierbar ist.

4. Verfahren nach einem der vorhergehenden Ansprüche, **dadurch gekennzeichnet, dass** bei der festgestellten Position des Fahrzeuges weitere Parameter, wie Fahrtrichtung und Geschwindigkeit oder deren Änderungen, berücksichtigt werden.

5. Verfahren nach einem der vorhergehenden Ansprüche, **dadurch gekennzeichnet, dass** bei der festgestellten Position des Fahrzeuges weitere Parameter, wie die Richtdiagramme der Antennen, berücksichtigt werden.

6. Vorrichtung zur Durchführung des Verfahrens gemäß einem der vorhergehenden Ansprüche.
